# EUROPEAN PATENT APPLICATION

(11) **EP 4 012 236 A1**
(43) Date of publication of application: **15.06.2022**
(21) Application number: 20849711.5
(22) Date of filing: 04.08.2020
(51) Int. Cl.: F16K 31/04, F25B 41/35

(54) **EXPANSION VALVE**

(30) Priority: 08.08.2019 JP 2019146798
(71) Applicant: Eagle Industry Co., Ltd., Minato-ku Tokyo 105-8587 (JP)
(72) Inventor: OGAWA Noriyuki, Tokyo 105-8587 (JP); SATO Koji, Tokyo 105-8587 (JP); KONDO Takayuki, Tokyo 105-8587 (JP); MURATA Naoki, Tokyo 105-8587 (JP); URAKAWA Ryota, Tokyo 105-8587 (JP)
(74) Representative: WSL Patentanwälte Partnerschaft mbB
(86) International application number: PCT/JP2020/029849
(87) International publication number: WO 2021/025023

(57) **Abstract**

Provided is an expansion valve capable of adjusting a flow rate with excellent responsiveness.

An expansion valve 1 includes: a main body portion 6 having a valve chamber 15 and a valve seat; a case 3 fixed to the main body portion 6; and a screw shaft 8 that is driven by driving force of rotation obtained by reducing a rotational movement of a rotor 13 due to the excitation of an excitation portion 2 by a speed reduction mechanism 7 to move a valve body 9 forward and backward. A bellows 10 configured to seal a gap between the inside of the case 3 and the valve chamber 15 is arranged in the valve chamber 15 to be externally fitted onto the valve body 9, and the rotation of the valve body 9 relative to the main body portion 6 is restricted by rotation restricting means 10, 18b, 43.

## Description

### {TECHNICAL FIELD}

The present invention relates to an expansion valve capable of adjusting a flow rate.

### {BACKGROUND ART}

Conventionally, in a refrigerating cycle device incorporated in a refrigerator, an air conditioner, etc., a liquid refrigerant output from a condenser is depressurized by an expander provided between the condenser and an evaporator to be easily evaporated. An expansion valve capable of adjusting a flow rate is used in the expander. For example, an expansion valve of Patent Citation 1 includes a main body portion including a valve chamber and a valve seat, a valve body capable of moving forward and backward relative to the valve seat, a bottomed cylindrical case fixed to the main body portion, an excitation portion arranged on an outer side of the case, a rotor that is rotatably supported on an inner side of the case and is driven to rotate by the excitation portion, and a screw shaft that is rotated by the rotational movement of the rotor. The expansion valve is configured such that the rotation of the rotor is converted into the forward and backward movement of the valve body in a linear direction by the screw shaft.

The expansion valve is also configured such that a sun gear is formed in the rotor, a planetary gear is arranged to be meshed with the sun gear, a ring gear is arranged to be meshed with the planetary gear, and a screw shaft is engaged with the ring gear. The sun gear, the planetary gear, and the ring gear constitute speed reduction mechanism to reduce the rotational speed of the rotor, so that the valve opening can be finely adjusted.

Further, in Patent Citation 1, the rod-shaped valve body is arranged ahead of the screw shaft, and a ball is interposed between the screw shaft and the valve body. Accordingly, the rotational force of the screw shaft is not transmitted to the valve body, but only the force in a forward movement direction generated by a male screw formed on the screw shaft being screwed forward with a female screw on the main body portion side is transmitted to the valve body. Further, opposite ends of the bellows for sealing a gap between the inside of the case and the valve chamber are fixed to the valve body and the main body portion, respectively. When the screw shaft is rotated to be moved in a backward movement direction in order to operate the expansion valve in an open direction, the elastic restoring force of the bellows causes the contact state between the valve body and the ball to be maintained.

### {CITATION LIST}

### {Patent Literature}

Patent Citation 1: JP 2006-226369 A (page 3, FIG. 1)

### {SUMMARY OF INVENTION}

### {Technical Problem}

However, in Patent Citation 1, the valve body, the ball, and the screw shaft are separately formed, and when the expansion valve is operated in the open direction, the elastic restoring force of the bellows causes the valve body to be moved backward. Accordingly, the movement of the valve body may be delayed compared to the backward movement of the screw shaft to reduce the responsiveness to adjust the valve opening.

The present invention has been made focusing on such a problem, and an object of the present invention is to provide an expansion valve capable of adjusting a flow rate with excellent responsiveness.

### {Solution to Problem}

In order to solve the problem described above, an expansion valve according to the present invention includes: a main body portion including a valve chamber and a valve seat; a valve body configured for moving forward and backward relative to the valve seat; a case fixed to the main body portion; an excitation portion arranged on an outer side of the case; a rotor that is rotatably supported on an inner side of the case and is driven to rotate by the excitation portion; a speed reduction mechanism configured for reducing a rotational speed of the rotor; a screw shaft that is driven by a driving force of rotation reduced by the speed reduction mechanism to move the valve body forward and backward; and a bellows configured to seal a gap between an inside of the case and the valve chamber and arranged in the valve chamber so as to be externally fitted onto the valve body, and rotation of the valve body relative to the main body portion being restricted by rotation restricting means. According to the aforesaid feature of the present invention, the gap between the inside of the case and the valve chamber can be sealed by the bellows to prevent a lubricant and the like used on the inner side of the case from leaking into the valve chamber side. In addition, the valve body is screwed directly with the screw shaft, the rotation of the valve body relative to the main body portion is restricted by the rotation restricting means, and the rotational movement of the screw shaft causes the valve body to be moved forward and backward in an axial direction. Thus, the responsiveness to adjust the valve opening can be enhanced.

It may be preferable that the valve body extends through a hole portion formed in the main body portion and is guided by an inner peripheral surface of the hole portion to move forward and backward. According to this preferable configuration, the valve body is guided by the inner peripheral surface of the hole portion formed in the main body portion constituting the valve chamber. Thus, the valve body can be stably moved forward and backward in a linear direction with a simple structure.

It may be preferable that a male screw is formed on the screw shaft, and a female screw that is screwed with the male screw is formed on the valve body. According to this preferable configuration, the valve body is guided in such a manner as to be interposed in a radial direction between the screw shaft on the inner side and the hole portion formed in the main body portion on the outer side. Thus, the valve body can be stably moved forward and backward in the linear direction.

It may be preferable that the bellows has a first end and a second end opposed to each other in an axial direction, the first end and the second end of the bellows are fixed to the valve body and the main body portion, respectively, and the bellows constitutes the rotation restricting means. According to this preferable configuration, the relative rotation between the valve body and the main body portion can be restricted by the bellows for sealing between the inside of the case and the valve chamber to simplify the structure.

It may be preferable that the bellows having a first end and a second end opposed to each other in an axial direction, a stationary ring is welded and fixed to the second end of the bellows, the stationary ring is fitted in a sealed manner into an annular recess formed in the main body portion, and the first end of the bellows is welded and fixed to the valve body. According to this preferable configuration, the stationary ring is welded and fixed to the one end of the bellows in advance and is fitted into the annular recess formed in the main body portion. Thus, the bellows can be easily assembled.

### {BRIEF DESCRIPTION OF DRAWINGS}

FIG. 1 is a cross-sectional view showing an expansion valve according to a first embodiment of the present invention.
FIG. 2 is an enlarged cross-sectional view showing a structure around a valve chamber in the first embodiment.
FIG. 3 is a view showing a bellows and a stationary ring in the first embodiment.
FIG. 4 is a plan view showing a speed reduction mechanism in the first embodiment.
FIG. 5 is a cutaway perspective view showing a carrier and a planetary gear in the first embodiment.
FIG. 6 is an enlarged cross-sectional view showing the movement of a screw shaft and a valve shaft in the first embodiment.
FIG. 7 is an enlarged cross-sectional view showing an expansion valve according to a second embodiment of the present invention.

### {DESCRIPTION OF EMBODIMENTS}

Modes for carrying out an expansion valve according to the present invention will be described below based on embodiments.

### {First embodiment}

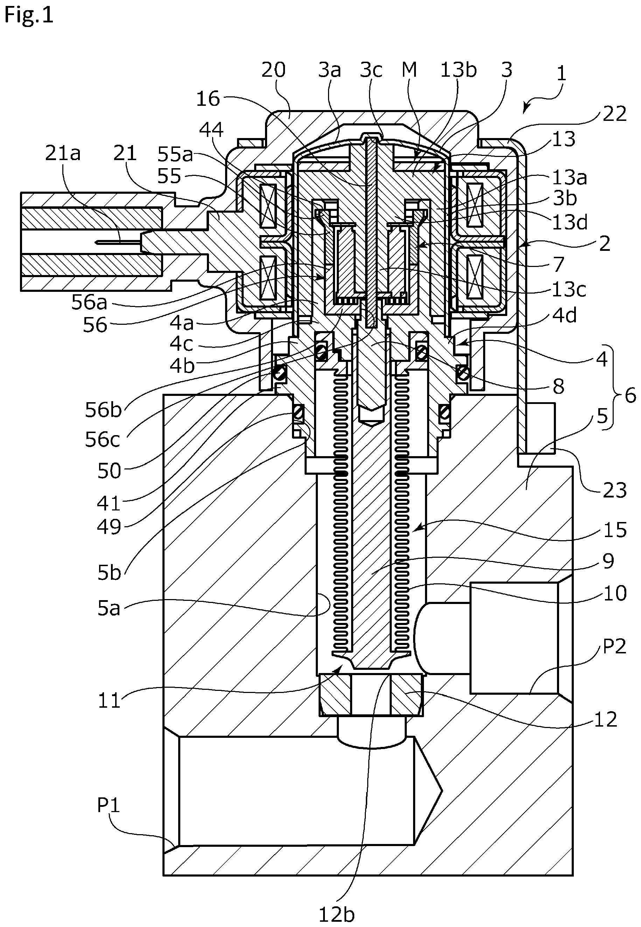

An expansion valve according to a first embodiment of the present invention will be described with reference to FIGS. 1 to 6.

An expansion valve 1 shown in FIG. 1 is adopted as an expansion valve constituting a refrigeration cycle in the first embodiment, and opens and closes so as to adjust a flow rate of a refrigerant flowing down a flow path.

As shown in FIG. 1, the expansion valve 1 mainly includes an excitation mechanism 2, a case 3 inserted into the excitation mechanism 2, a main body portion 6 including a base body 4 defining a machine room M together with the case 3, and a housing 5, a speed reduction mechanism 7 arranged on the inner side of the case 3, a screw shaft 8 that is rotated via the speed reduction mechanism 7, and a valve shaft 9 as a valve body that is moved forward and backward in a linear direction due to the rotational movement of the screw shaft 8, a bellows 10 extending between the main body portion 6 and the valve shaft 9, and a throttle member 12 constituting a valve seat 12b on which a contact portion 11 of the valve shaft 9 is seated.

The housing 5 is provided with a primary port P1 into which the fluid on the upstream side of the expansion valve 1 flows, and a secondary port P2 out of which the fluid flows down to the downstream side of the expansion valve 1, and a hollow space 5a is formed to communicate with the primary port P1 and the secondary port P2 and to be opened to the outside (that is, upward in FIG. 1). The open side of the hollow space 5a is formed to have a large inner diameter to constitute a stepped opening portion 5b, and a cylindrical portion 4b of the base body 4 on the side of the housing 5, which will be described in detail later, is inserted into and fixed to the opening portion 5b.

A valve chamber 15 is defined by the housing 5 and the cylindrical portion 4b of the base body 4 to communicate with the primary port P1 and the secondary port P2.

Next, the excitation mechanism 2 will be described. The excitation mechanism 2 mainly includes a stator 21 having coils and a resin mold 20 containing the stator 21. The stator 21 has a lead 21a, and is excited by the coils being energized through the lead 21a.

The mold 20 is formed of a synthetic resin into a bottomed tubular shape, with which the stator 21 is integrated by insert molding, and the case 3, the base body 4, the speed reduction mechanism 7. and a rotor 13, which will be described in detail later, are placed on an inner side of the mold 20.

Next, the case 3 will be described. The case 3 is formed of a non-magnetic metal into a bottomed tubular shape, and a recess 3c recessed outward is formed in the central portion of a bottom portion 3a rounded outward. One end portion of a shaft 16, which will be described later, is rotatably held in the recess 3c.

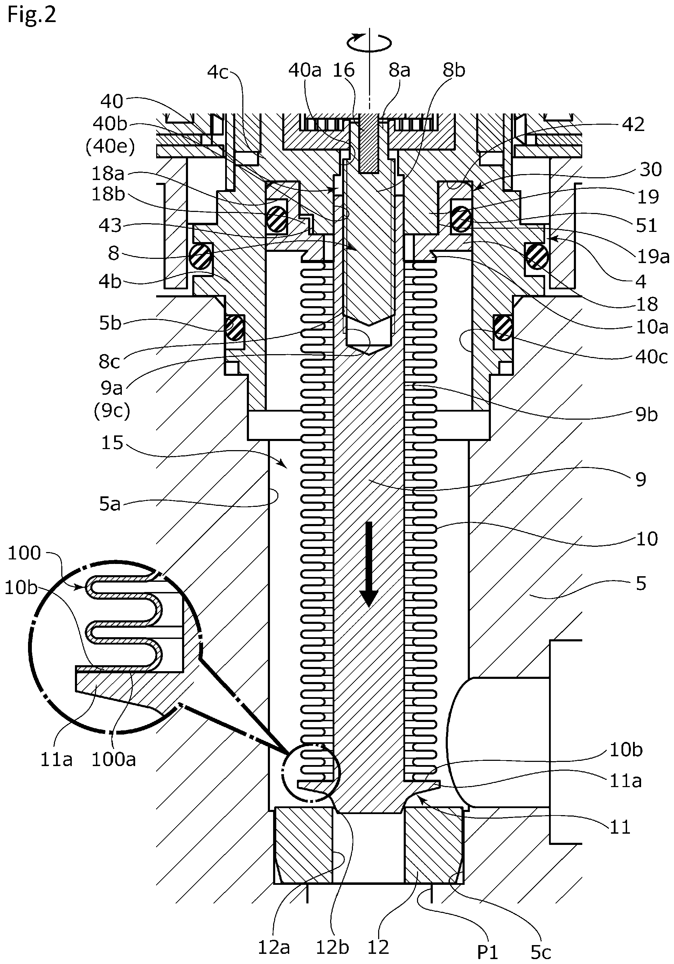

Next, the base body 4 will be described. The base body 4 has a cylindrical portion 4a that is opened on the side of the mold 20 and a cylindrical portion 4b that is opened on the side of the housing 5. A hole portion 40 (see FIG. 2) is formed to extend in an axial direction in a receiving portion 4c separating the cylindrical portion 4a on the side of the mold 20 and the cylindrical portion 4b on the side of the housing 5, and the receiving portion 4c constitutes the respective bottoms of the cylindrical portions 4a and 4b.

The cylindrical portion 4b of the base body 4 on the side of the housing 5 is provided with a large diameter portion 41 protruding radially outward at the central portion in an extending direction thereof, and the large diameter portion 41 is inserted into an opening-side end portion of the mold 20 to connect the base body 4 and the mold 20. An O-ring 50 is provided in an annular groove formed on an outer periphery of the large diameter portion 41 to seal a gap between the cylindrical portion 4b and the mold 20. An upper surface of the mold 20 is supported by a retaining piece of a retainer 22 having an L-shape in cross section, and a hanging piece orthogonal to the retaining piece is fastened and fixed to the housing 5 by a bolt 23 to prevent the mold 20 from falling out of the housing 5 upward.

Further, the tip portion of the cylindrical portion 4b of the base body 4 on the side of the housing 5 is inserted into the opening portion 5b formed in the housing 5 to connect the base body 4 and the housing 5. An O-ring 49 is arranged in the annular groove portion formed on the outer periphery of the tip portion of the cylindrical portion 4b to seal a gap between the cylindrical portion 4b and the housing 5.

An opening-side end portion of the case 3 is fitted onto an outer peripheral surface of the receiving portion 4c of the base body 4, and an opening-side end face of the case 3 is placed on an annular ridge 4d formed on the outer peripheral surface of the receiving portion 4c.

As shown in FIG. 2, the screw shaft 8 extends through the hole portion 40 formed in the receiving portion 4c of the base body 4. The screw shaft 8 includes a head portion 8a fixed to the shaft 16 and a body portion 8b having a diameter larger than the head portion 8a, and a male screw portion 8c is formed to have a thread on an outer peripheral surface of the body portion 8b. Further, the hole portion 40 has a screw shaft guide portion 40a having an inner diameter slightly larger than the outer diameter of the body portion 8b of the screw shaft 8, and a valve shaft guide portion 40b provided on the side of the housing 5 of the screw shaft guide portion 40a and having an inner diameter slightly larger than the outer diameter of the valve shaft 9.

The body portion 8b of the screw shaft 8 extends through a screw hole 9a formed at the upper end of the valve shaft 9 in the figure, and the male screw portion 8c formed in the body portion 8b of the screw shaft 8 is screwed with a female screw portion 9c having a thread on an inner peripheral surface of the screw hole 9a to connect the screw shaft 8 and the valve shaft 9.

The valve shaft 9 is provided with a body portion 9b linear in the axial direction thereof and a contact portion 11 integrally provided at the tip of the body portion 9b, and the contact portion 11 can be brought into contact with or separated from the valve seat 12b to open and close the valve, and adjust the opening. Further, the valve shaft 9 is formed with a long shaft length relative to its outer diameter. The contact portion 11 is provided with an annular flange portion 11a provided on the side of the screw shaft 8 and protruding radially outward from the body portion 9b, and the flange portion 11a has a shape that gradually tapers toward the tip. The valve shaft 9 is guided in such a manner that the upper end of the valve shaft 9 in the figure is interposed in a radial direction between the body portion 8b of the screw shaft 8 and an inner peripheral surface 40e of the valve shaft guide portion 40b to be stably moved forward and backward in the linear direction.

The throttle member 12 is fixed to a stepped portion 5c communicating with the primary port P1 formed in the housing 5. The throttle member 12 has a cylindrical shape having a through hole 12a extending in the axial direction of the valve shaft 9, and the inner diameter of the through hole 12a is formed to be smaller than the inner diameter of the primary port P1 of the housing 5. Further, an outer peripheral portion of the throttle member 12 is fixed to the stepped portion 5c in a sealed manner.

Further, an upper end of the through hole 12a of the throttle member 12 serves as a valve seat 12b, and the inner diameter of the through hole 12a is formed to be larger than the minimum diameter of the outer diameter of the contact portion 11 of the valve shaft 9 and be smaller than the maximum diameter thereof. Thus, when the contact portion 11 is seated on the valve seat 12b on the periphery of the through hole 12a, a part of the contact portion 11 can be inserted into the inside of the through hole 12a, and the cross-sectional area of the flow path, which is a gap between the contact portion 11 and the through hole 12a, can vary depending on the insertion depth of the contact portion 11 into the through hole 12a to adjust the flow rate.

The rotor 13 is provided on the inner side of the case 3. The rotor 13 is formed into a bottomed cylindrical shape that is opened on the side of the base body 4. A tubular wall portion 13a of the rotor 13 is provided between a tubular wall portion 3b of the case 3 and the cylindrical portion 4a of the base body 4 on the side of the mold 20. A rotating shaft portion 13c extends coaxially with the tubular wall portion 3b and downward at the central portion of a bottom portion 13b of the rotor 13, and the shaft 16 extends through and is fixed to the rotating shaft portion 13c.

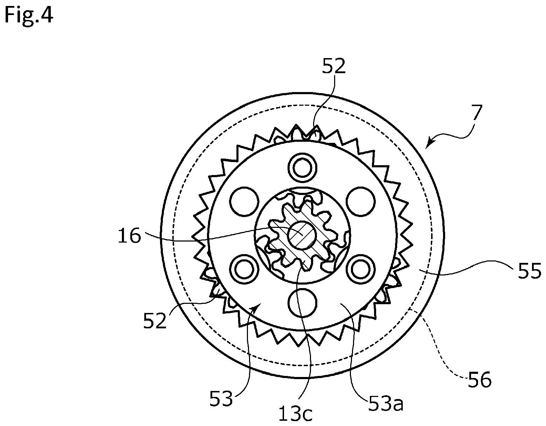

The tubular wall portion 13a of the rotor 13 serves as a permanent magnet, and the rotor 13 is rotated due to the excitation of the stator 21. More specifically, the rotor 13 and the stator 21 constitute a so-called stepper motor. Further, as shown in FIG. 4, a gear portion constituting a sun gear is formed on an outer peripheral surface of the rotating shaft portion 13c. The rotation of the rotating shaft portion 13c is reduced by the speed reduction mechanism 7 to be transmitted to the screw shaft 8. The speed reduction mechanism 7 includes the sun gear formed on the outer peripheral surface of the rotating shaft portion 13c, and a carrier 53, planetary gears 52, a stationary ring gear 55, and a rotating ring gear 56, which will be described in detail later.

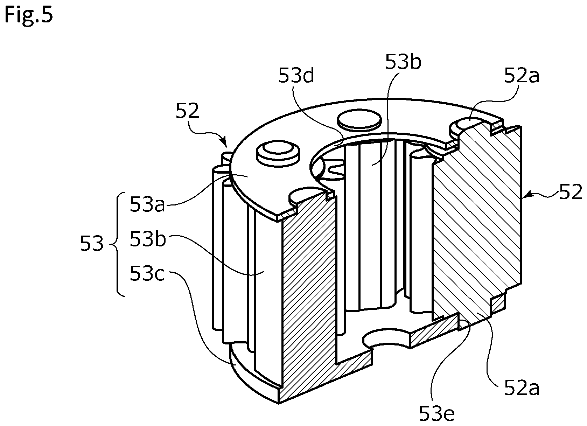

The carrier 53 (see FIGS. 4 and 5) is provided on the inner side of the cylindrical portion 4a of the base body 4 on the side of the mold 20. The carrier 53 is held in such a manner as to be interposed in the axial direction between an end face of a base-side large diameter portion 13d of the rotating shaft portion 13c of the rotor 13 and the receiving portion 4c of the base body 4. As shown in FIG. 5, the carrier 53 is formed in a unit including a lid disk 53a formed of resin into a disk shape, a disk-shaped support disk 53c facing in parallel to the lid disk 53a, and three columns 53b, each of which is fixed to the lid disk 53a and the support disk 53 at opposite ends, respectively. The three columns 53b are equiangularly arranged in the circumferential direction of the lid disk 53a and the support disk 53c. Further, a hole portion 53d is formed in the central portion of the lid disk 53a, through which the rotating shaft portion 13c of the rotor 13 can be inserted.

Each of the planetary gears 52 is arranged between the columns 53b in the circumferential direction of the lid disk 53a and the support disk 53c. The planetary gears 52 are each a columnar body having a tooth profile on their outer peripheral surface, and each have columnar shaft portions 52a protruding from opposite ends thereof in the longitudinal direction, respectively, and the shaft portions 52a extend through respective pivotally supporting holes 53e formed in the lid disk 53a and the support disk 53c, so that the planetary gears 52 are rotatably supported between the lid disk 53a and the support disk 53c. The planetary gears 52 are meshed with the gear portion formed on the outer peripheral surface of the rotating shaft portion 13c of the rotor 13.

Further, as shown in FIG. 1, on the radially outer side of the carrier 53 and the planetary gear 52, the stationary ring gear 55 is arranged on the side of the mold 20 and the rotating ring gear 56 is arranged on the side of the screw shaft 8.

With reference to FIG. 4, the stationary ring gear 55 is integrally molded with resin into a cylindrical shape, is arranged on the radially outer side of the carrier 53 and the planetary gear 52, and is fixed by fixing means (not shown) so as not to rotate relative to the base body 4. Further, the inner peripheral surface of the stationary ring gear 55 has a gear portion that is meshed with the planetary gear 52.

A ridge 55a is formed on the outer peripheral surface of the stationary ring gear 55 to protrude radially outward over the circumferential direction, and the ridge 55a is inserted into a recessed groove 44 formed on the inner peripheral surface of the cylindrical portion 4a of the base body 4 on the side of the mold 20 over the circumferential direction, so that the stationary ring gear 55 and the rotating ring gear 56 are held within the cylindrical portion 4a of the base body 4 on the side of the mold 20.

The rotating ring gear 56 is integrally molded with resin into an annular shape, and is formed into a bottomed cylindrical shape to have a tubular wall portion 56a and a bottom portion 56b which are arranged on the outer side of the carrier 53 and the planetary gear 52. The inner peripheral surface of the tubular wall portion 56a has a gear portion that is meshed with the planetary gear 52. The head portion 8a of the screw shaft 8 is fixed at the central portion of the bottom portion 56b by fitting or integral molding. Although not shown here, the head portion 8a of the screw shaft 8 has such a shape that the head portion 8a is engaged with the bottom portion 56b in a convex-concave manner, so that the rotation thereof relative to the rotating ring gear 56 is restricted. The shaft 16 described above is inserted through a hole portion 56c of the rotating ring gear 56 to be rotatably fixed to the screw shaft 8.

As shown in FIG. 2, the bellows 10 is arranged on the outer periphery of the valve shaft 9. The bellows 10 is a so-called formed bellows formed by pressing a metal plate into a bellows shape in which a plurality of peak portions 100 are connected to one another, and the thickness thereof is constant. An annular stationary ring 18 is welded and fixed to one end portion 10a of the bellows 10 in the longitudinal direction over the entire circumference of the one end portion 10a. Further, the bellows 10 functions as a partition wall between the valve chamber 15 and the machine room M, and then the refrigerant in the valve chamber 15 is not mixed with the grease or the like in the machine room M.

In the base body 4, a tubular ridge 19 is formed on the radially inner side of the cylindrical portion 4b on the side of the housing 5 to protrude from the receiving portion 4c toward the inside of the valve chamber 15, and an outer peripheral surface 19a of the ridge 19, an inner peripheral surface 40c of the cylindrical portion 4b on the side of the housing 5, and a bottom surface 42 of the receiving portion 4c constitute an annular recess 30. The stationary ring 18 fixed to the one end portion 10a of the bellows 10 is inserted and fitted into the annular recess 30. Further, a recessed groove is formed on the outer peripheral surface of the stationary ring 18 over the circumferential direction, and an O-ring 51, which is annular sealing means, is arranged within the recessed groove to seal a gap between the outer peripheral surface of the stationary ring 18 and the inside of the case 3.

Another end portion 10b of the bellows 10 is welded and fixed to an upper surface of the flange portion 11a of the contact portion 11 over the entire circumference of the other end portion 10b. The bellows 10 is arranged between the stationary ring 18 and the flange portion 11a in a state of being slightly contracted in the axial direction so as to bias the contact portion 11 in a valve closing direction in a valve open state. Accordingly, the force in a separating direction is not generated in the welded portions to the stationary ring 18 and the flange portion 11a, and the welded portions can be then prevented from being damaged.

Further, a recess 43 is formed in the ridge 19 protruding from the receiving portion 4c of the base body 4 toward the inside of the valve chamber 15 to be opened downward and radially outward, and a protrusion 18b is formed on the inner peripheral surface of the stationary ring 18 to protrude radially inward and extend in the axial direction. The recess 43 formed in the base body 4 and the protrusion 18b formed on the stationary ring 18 are engaged with each other, that is, so-called key-engaged with each other to constitute rotation restricting means for restricting the relative rotation between the base body 4 and the stationary ring 18.

In this way, opposite ends 10a and 10b of the bellows 10 in the longitudinal direction are fixed to the base body 4 and the valve shaft 9, respectively, to seal a gap between the inside of the case 3 and the valve chamber 15. A lubricant is used on the inner side of the case 3 for the meshing positions between the gears and the movable members such as the shaft 16, and the bellows 10 prevents the lubricant on the inner side of the case 3 from leaking into the valve chamber 15.

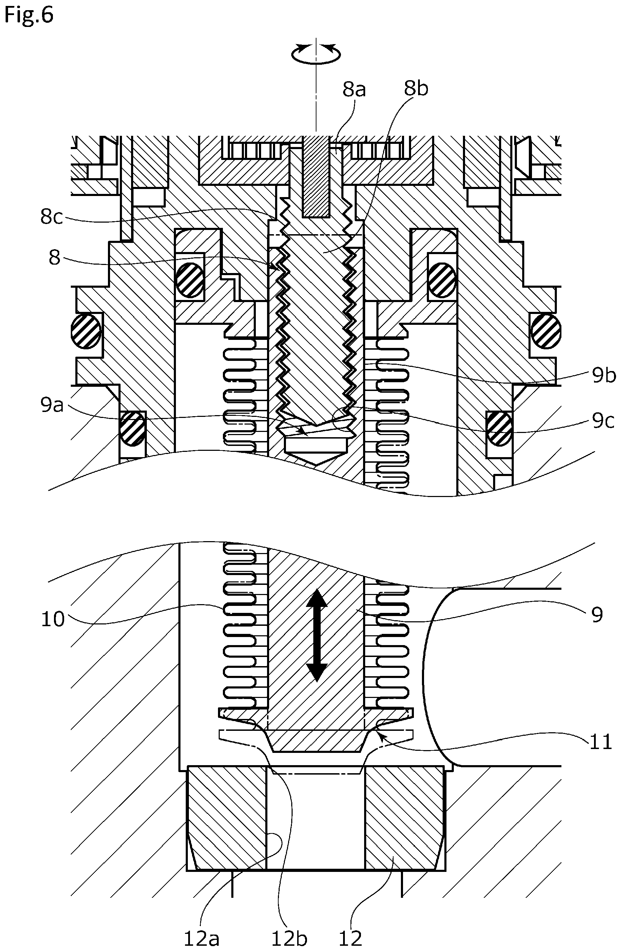

Additionally, the valve shaft 9 including the contact portion 11 is directly screwed with the screw shaft 8, and the rotation of the valve shaft 9 relative to the main body portion 6 is restricted by the bellows 10, that is, the bellows 10 also constitutes the rotation restricting means. Thus, as shown in FIG. 6, the rotational movement of the screw shaft 8 causes the valve shaft 9 screwed with the screw shaft 8 to be linearly moved forward and backward in the axial direction without rotating, so that the responsiveness to adjust the valve opening can be increased.

Further, since the bellows 10 is made of metal, the bellows 10 has high rigidity to torsional stress, and can strongly restrict the rotation of the valve shaft 9 relative to the main body portion 6.

Further, since the bellows 10 is formed by pressing a metal plate into a bellows shape in which a plurality of peak portions 100 are connected to one another in the axial direction, and the thickness thereof is constant, the rigidity to torsional stress can be increased evenly in the longitudinal direction of the bellows 10 to prevent local deformation and increase the responsiveness.

Further, the stationary ring 18 is welded and fixed to the one end of the bellows 10 in advance, and the stationary ring 18 is fitted into the annular recess 30 formed in the base body 4 via the O-ring 51, so that the bellows 10 can be easily assembled.

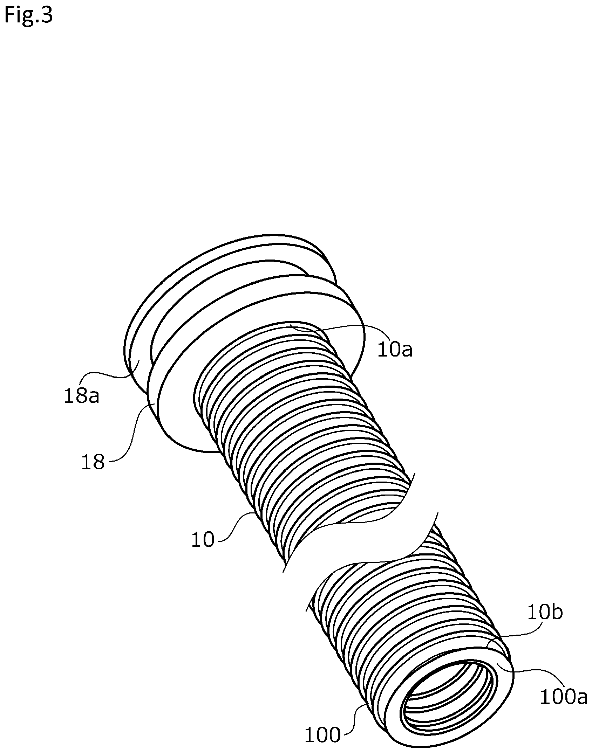

Further, as shown in FIGS. 2 and 3, the one end portion 10a and the other end portion 10b of the bellows 10 have the flat surfaces 100a constituting the peak portions 100 brought into contact with the stationary ring 18 and the flange portion 11a, and are welded and fixed over the entire circumference of the flat surfaces 100a. Thus, the contact area can be increased, the large welded portion can be secured at the peak portions 100 having a large outer diameter to increase the strength to fix the bellows 10 to the stationary ring 18 and the flange portion 11a, and the bellows 10 can contribute to restrict the rotation of the valve shaft 9.

Further, a structure in which an outer peripheral surface of the valve shaft 9 is inserted through the hole portion 40 formed in the receiving portion 4c of the base body 4, and is guided by an inner peripheral surface of the valve shaft guide portion 40b in the hole portion 40, so that the valve shaft 9 is moved forward and backward to guide the contact portion 11, is not arranged around the contact portion 11 within the valve chamber 15. Thus, the space around the contact portion 11 can be effectively utilized, and the degree of freedom in arranging the secondary port P2 can be increased. Additionally, since the structure for guiding the contact portion 11 is not provided within the valve chamber 15, the capacity of the valve chamber 15 can be secured, so that the radial dimension of the valve chamber 15 can be designed to be small.

Further, the housing-side cylindrical portion 4b of the base body 4 extends through the hollow space 5a of the housing 5, and the valve chamber 15 is defined by the hollow space 5a and the cylindrical portion 4b to communicate with the primary port P1 and the secondary port P2. This allows a portion of the expansion valve 1 protruding outward from the housing 5 to be reduced in dimension while securing the volume of the valve chamber 15.

### {Second embodiment}

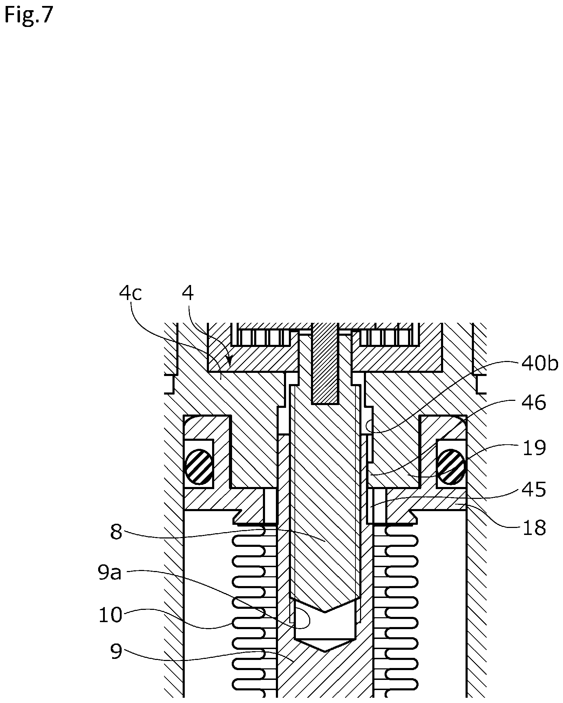

Next, an expansion valve according to a second embodiment of the present invention will be described with reference to FIG. 7. The description of the same configuration as that of the embodiment described above and the overlapping configuration will be omitted.

As shown in FIG. 7, a recess 45 is formed on the outer peripheral surface of the valve shaft 9 to be opened upward and radially outward, and a protrusion 46 protruding radially inward is formed in the valve shaft guide portion 40b of the ridge 19 protruding from the receiving portion 4c of the base body 4 toward the inside of the valve chamber 15. The recess 45 formed in the valve shaft 9 and the protrusion 46 formed in the base body 4 are engaged with each other to constitute the rotation restricting means for restricting the relative rotation between the base body 4 and the valve shaft 9.

When the rotation restricting means is configured in this way, the configuration of the recess 43 formed in the base body 4 and the protrusion 18b formed on the stationary ring 18 may be omitted. The configuration of the rotation restricting means formed in the valve shaft 9 and the ridge 19 of the base body 4 is not limited to this. For example, a hole may be formed to extend through the ridge 19 in the radial direction, and a pin inserted into the hole and a recess formed on the outer peripheral surface of the valve shaft 9 may be used to constitute the rotation restricting means.

Although the embodiments according to the present invention have been described above with reference to the drawings, the specific configuration is not limited to these embodiments, and any changes or additions within the scope of the scope of the present invention are included in the present invention.

For example, in the embodiment described above, the rotation restricting means for the valve shaft 9 and the main body portion 6 has been described with having a configuration in which the recess 43 formed in the base body 4 is engaged with the protrusion 18b formed on the stationary ring 18, but the present invention is not limited to this. For example, the stationary ring 18 may be fixed to the annular recess 30 formed in the main body portion 6 by press fitting, swaging, or welding, so that the bellows 10 may function as the rotation restricting means for the valve shaft 9 and the main body portion 6.

Further, only the bellows 10 may constitute the rotation restricting means.

Further, in order to secure the stroke of the valve shaft 9 and also to have a function to restrict the rotation of the valve shaft 9, the bellows 10 preferably has a proportion having an axial dimension of 10 times or less the inner diameter of the bellows 10.

Further, the stationary ring 18 may be welded to the annular recess 30 over the entire circumference, so that the recessed groove 18a formed in the stationary ring 18 and the O-ring 51 may be omitted.

Further, the bellows 10 is not limited to a formed bellows formed by pressing a metal plate into a bellows shape in which peaks and valleys are alternately connected to one another, and may be a welded bellows configured by laminating and welding a corrugated pressed disk-shaped metal plate.

The bellows 10 is not limited to be made of metal, and may have any configuration as long as it has high rigidity in a torsional direction. For example, the bellows 10 may be configured such that a spiral structural material or the like is built in or externally mounted on a bellows-shaped tubular body made of synthetic resin. In this case, the spiral structural material is preferably welded and fixed to the base body 4 and the contact portion 11.

Further, the bellows 10 is not limited to be configured to have a perfect circle in a plan view. For example, the bellows 10 can be formed to have a width-across-flats shape in a plan view to further increase the rigidity to torsional stress.

Further, the configuration of the speed reduction mechanism 7 is not limited to the configuration of the embodiments described above as long as it is configured to reduce the rotation of the rotating shaft portion 13c of the rotor 13.

Further, the configuration of the case 3, the base body 4, the rotor 13, and the like is not limited to the configuration of the embodiments described above as long as the rotational movement of the rotor 13 is transmitted to the screw shaft 8 via the speed reduction mechanism 7.

Further, the present invention is not limited to a structure in which the screw shaft 8 has the male screw portion 8c and the valve shaft 9 has the female screw portion 9c, and the screw shaft 8 may have a female screw portion and the valve shaft 9 may have a male screw portion.

### {REFERENCE SIGNS LIST}

- 1: Expansion valve
- 2: Excitation mechanism (excitation portion)
- 3: Case
- 4: Base body
- 4a: Mold-side cylindrical portion
- 4b: Housing-side cylindrical portion
- 4c: Receiving portion
- 4d: Ridge
- 5: Housing
- 5b: Opening portion
- 5a: Hollow space
- 6: Main body portion
- 7: Speed reduction mechanism
- 8: Screw shaft
- 8c: Male screw
- 9: Valve shaft (valve body)
- 9c: Female screw
- 10: Bellows (rotation restricting means)
- 11a: Flange portion
- 11: Contact portion
- 12: Throttle member
- 12a: Through hole
- 12b: Valve seat
- 13: Rotor
- 13a: Tubular wall portion
- 13c: Rotating shaft portion
- 15: Valve chamber
- 16: Shaft
- 18: Stationary ring
- 18b: Protrusion (rotation restricting means)
- 19: Ridge
- 20: Mold
- 21: Stator
- 30: Annular recess
- 40: Hole portion
- 40a: Shaft guide portion
- 40b: Valve shaft guide portion
- 40e: Inner peripheral surface
- 43: Recess (rotation restricting means)
- 44: Recessed groove
- 45: Recess (rotation restricting means)
- 46: Protrusion (rotation restricting means)
- 51: O-ring
- 52: Planetary gear
- 53: Carrier
- 53b: Column
- 55: Stationary ring gear
- 56: Rotating ring gear
- 100: Peak portion
- 100a: Flat surface
- M: Machine room
- P1: Primary port
- P2: Secondary port

## Claims

1. An expansion valve comprising:
a main body portion including a valve chamber and a valve seat;
a valve body configured for moving forward and backward relative to the valve seat;
a case fixed to the main body portion;
an excitation portion arranged on an outer side of the case;
a rotor that is rotatably supported on an inner side of the case and is driven to rotate by the excitation portion;
a speed reduction mechanism configured for reducing a rotational speed of the rotor;
a screw shaft that is driven by a driving force of rotation reduced by the speed reduction mechanism to move the valve body forward and backward; and
a bellows configured to seal a gap between an inside of the case and the valve chamber and arranged in the valve chamber so as to be externally fitted onto the valve body, and rotation of the valve body relative to the main body portion being restricted by rotation restricting means.

2. The expansion valve according to claim 1, wherein the valve body extends through a hole portion formed in the main body portion and is guided by an inner peripheral surface of the hole portion to move forward and backward.

3. The expansion valve according to claim 2, wherein a male screw is formed on the screw shaft, and a female screw that is screwed with the male screw is formed on the valve body.

4. The expansion valve according to any one of claims 1 to 3, wherein the bellows has a first end and a second end opposed to each other in an axial direction, the first end and the second end of the bellows are fixed to the valve body and the main body portion, respectively, and the bellows constitutes the rotation restricting means.

5. The expansion valve according to any one of claims 1 to 3, the bellows having a first end and a second end opposed to each other in an axial direction, a stationary ring is welded and fixed to the second end of the bellows, the stationary ring is fitted in a sealed manner into an annular recess formed in the main body portion, and the first end of the bellows is welded and fixed to the valve body.
